# EUROPÄISCHE PATENTSCHRIFT

(11) **EP 2 388 169 B1**
(45) Veröffentlichungstag und Bekanntmachung des Hinweises auf die Patenterteilung: **27.04.2016**
(21) Anmeldenummer: 10015925.0
(22) Anmeldetag: 22.12.2010
(51) Int. Cl.: B60T 7/10, B60T 7/08

(54) **Betätigungsvorrichtung für eine Feststellbremse**
Activation device for a parking brake
Dispositif d'actionnement pour un frein de stationnement

(30) Priorität: 18.05.2010 DE 202010006900 U
(43) Veröffentlichungstag der Anmeldung: 23.11.2011
(73) Patentinhaber: Power-Cast Light Metal Solutions GmbH & Co KG, 73265 Dettingen/Teck (DE)
(72) Erfinder: Barcin, Baris, 70771 Leinfelden-Echterdingen (DE)
(74) Vertreter: Ruckh, Rainer Gerhard

(56) Entgegenhaltungen:
- DE-A1- 19 935 420
- DE-U1-202004 019 066

## Beschreibung

Die Erfindung betrifft eine Betätigungsvorrichtung gemäß dem Oberbegriff des Anspruchs 1.

Eine derartige Betätigungsvorrichtung ist aus der DE 20 2004 019 066 U1 bekannt.

Eine Betätigungsvorrichtung gemäß der nachveröffentlichen DE 20 2010 001 257 U1 umfasst ferner einen an einem Lagerbock schwenkbar gelagerten Handbremshebel, welcher mittels einer Festsetzeinrichtung in einer vorgegebenen Schwenkstellung fixierbar ist. Im Handbremshebel ist eine in Wirkverbindung mit der Festsetzeinrichtung stehende Betätigungsstange geführt, welche im Handbremshebel verschiebbar gelagert ist. Am Lagerbock sind benachbart angeordnet ein Endanschlag und ein Schalter vorgesehen, wobei der Handbremshebel ein Anschlagsegment aufweist. In einer durch den Endanschlag bestimmten Endposition des Handbremshebels liegt das Anschlagsegment am Endanschlag an und betätigt dabei den Schalter.

Der Schalter umfasst einen an der Oberseite eines Schaltgehäuses verschiebbar gelagerten Schaltknopf, welcher durch das Anschlagsegment des Handbremshebels in das Schaltgehäuse einfahrbar ist. Der Schalter weist bei aus dem Schaltgehäuse ausgefahrenem Schaltknopf einen ersten Schaltzustand und bei in das Schaltgehäuse eingefahrenem Schaltknopf einen zweiten Schaltzustand auf.

Dabei ist abhängig von den Schaltzuständen des Schalters eine Anzeige für die Betätigung der Feststellbremse aktiviert oder deaktiviert.

Diese Anzeige ist im Fahrerraum des Fahrzeugs, insbesondere Kraftfahrzeug, installiert, in welchem auch der Handbremshebel angeordnet ist. Die Anzeige bildet ein Warnsignal, das dem Fahrer die Betätigung der Feststellbremse anzeigt, damit der Fahrer diese vor dem Anfahren löst.

Zur Montage des Schalters am Lagerbock sind am Gehäuse des Schalters Bolzen und seitlich angeordnete Klammern vorgesehen, die in entsprechende Aufnahmen des Lagerbocks eingeführt und dort fixiert werden müssen.

Nachteilig hierbei ist, dass zur Ausbildung der Aufnahmen für den Schalter des Lagerbocks eine relativ komplexe Geometrie notwendig ist, die fertigungstechnische hohe Anforderungen an den aus einem metallischen Druckgussteil bestehenden Lagerbock stellt.

Ein noch gravierenderer Nachteil besteht darin, dass die Befestigungsmittel zur Fixierung des Schalters am Lagerbock äußerst empfindlich gegen bauteilbedingte Toleranzen sind. Weichen die Geometrien des Schalters und des Lagerbocks nur wenig von ihren Sollwerten ab, so stimmen die relativen Abstände der Befestigungsmittel zur Fixierung des Schalters am Lagerbock nicht mehr überein, so dass entweder der Schalter nicht mehr fest am Lagerbock sitzt oder sogar überhaupt nicht mehr am Lagerbock befestigt werden kann. Derartige toleranzbedingte Geometrieabweichungen lassen sich jedoch insbesondere bei der Herstellung des Lagerbocks generell nicht vermeiden.

Der Erfindung liegt die Aufgabe zugrunde, eine Befestigungsvorrichtung der eingangs genannten Art derart weiterzubilden, dass eine gegen Bauteiltoleranzen unempfindliche Montage eines Schalters am Lagerbock der Befestigungsvorrichtung ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Betätigungsvorrichtung für eine Feststellbremse mit einem an einem Lagerbock schwenkbar gelagerten Handbremshebel. Dieser ist mittels einer Festsetzeinrichtung in einer vorgegebenen Schwenkstellung fixierbar. Weiter weist die Betätigungsvorrichtung eine im Handbremshebel geführte und in Wirkverbindung mit der Festsetzeinrichtung stehende Betätigungsstange auf, welche im Handbremshebel verschiebbar gelagert ist. Am Lagerbock sind ein Endanschlag und ein Schalter vorgesehen. Der Handbremshebel weist ein Anschlagsegment auf, wobei in einer durch den Endanschlag bestimmten Endposition des Handbremshebels ein Anschlagsegment am Endanschlag anliegt und dabei den Schalter betätigt. Zur Befestigung des Schalters sind am Lagerbock Rastmittel und ein Federelement vorgesehen, wobei die Rastmittel in Rastaufnahmen des Lagerbocks einführbar sind. Der Schalter ist dadurch verdrehsicher am Lagerbock gelagert. Diese Lagerung des Schalters ist durch Einrasten des Federelements an einem Anschlag des Lagerbocks gesichert.

Ein wesentlicher Vorteil der Erfindung besteht darin, dass der Schalter am Lagerbock der Betätigungsvorrichtung nicht nur einfach und schnell montiert werden kann. Vielmehr wird durch die Kombination der Rastmittel mit dem Federelement erreicht, dass die Befestigung des Schalters auch bei vorhandenen toleranzbedingten Schwankungen der Geometrie des Lagerbocks und auch des Schalters selbst sicher und reproduzierbar gewährleistet ist.

Besonders vorteilhaft ist als Rastmittel am Schalter ein T-förmiges Segment vorgesehen, wobei das Unterteil des T-förmigen Segments eine Rippe bildet, die in eine an einem oberen Rand des Lagerbocks ausmündende, die Rastaufnahme bildende Nut einführbar ist wobei die Nut in vertikaler Richtung verläuft und eine verdrehsichere Lagerung für die Rippe bildet und wobei bei in die Nut eingeführter Rippe das Oberteil des T-förmiges Segments auf dem die Nut begrenzenden Rand des Lagerbocks aufliegt.

Die Herstellung einer verdrehsicheren Lagerung des Schalters am Lagerbock kann durch Einführen der Rippe in die Nut besonders schnell und einfach hergestellt werden, da die Rippe nur von oben in die Nut eingesteckt werden muss. Durch das auf dem Rand des Lagerbocks aufliegende Oberteil des T-förmigen Segments wird zudem in einfacher Weise eine Lagesicherung des Schalters in einer weiteren Raumrichtung erhalten.
Weiter ist vorteilhaft, dass die so hergestellte verdrehsichere Lagerung des Schalters unempfindlich gegen Bauteiltoleranzen der jeweiligen Bauteile ist. Weiter weist in einer vorteilhaften Ausgestaltung der Erfindung das Federelement zwei V-förmige angeordnete Schenkel auf, wobei an einem Schenkel eine Rastleiste vorgesehen ist, die am Anschlag des Lagerbocks einrastbar ist. Dabei weist die Rastleiste eine Anordnung von parallel laufenden Verrastungsrippen auf, wobei an einer Teilmenge der Verrastungsrippe der Anschlag einrastbar ist. Besonders vorteilhaft verläuft die Rastleiste entlang einer schiefen Ebene wobei der Anschlag von der Unterkante eines Stegs des Lagerbocks gebildet ist.
Mit dem Federelement wird der Schalter in der Befestigungsposition, die durch das Einführen der Rippe des T-förmigen Segments in die Nut des Lagerbocks und dem Anliegen des Oberteils des T-förmigen Segments auf dem Rand des Lagerbocks gegeben ist, sicher und bleibend fixiert.
Ein wesentlicher Vorteil hierbei ist, dass bei Einführen der Rippe des Tförmigen Segments in die Nut des Lagerbocks gleichzeitig und selbsttätig, das heißt ohne einen weiteren Arbeitsgang, auch die Fixierung des Federelements am Anschlag erfolgt. Damit wird allein durch den Prozess des Einführens der Rippe in die Nut die gesamte Montage des Schalters am Lagerbock bewerkstelligt.

Ein weiterer wesentlicher Vorteil besteht darin, dass mit der Rastleiste des Federelements eine sich selbst findende Verrastung am Anschlag erzielt wird, wodurch auf einfache Weise ein Toleranzausgleich geschaffen wird. Dies bedeutet, dass je nach toleranzbedingten Geometrieschwankungen des Schalters und insbesondere des Lagerbocks der Anschlag an unterschiedlichen Verrastungsrippen der Rastleiste einrasten kann.
Besonders vorteilhaft weist der Schalter ein Schaltgehäuse auf, wobei das Federelement und das T-förmige Segment einstückig mit dem Schaltgehäuse ausgebildet sind und das Schaltgehäuse aus Kunststoff besteht.
Die für die Fixierung des Schalters am Lagerbock vorgesehenen Mittel können somit kostengünstig und rationell hergestellt werden.

Die Erfindung wird beispielhaft im Folgenden anhand der Zeichnungen erläutert. Es zeigen:
- Figur 1:: Einzeldarstellung eines Lagerbocks einer Betätigungsvorrichtung für eine Feststellbremse
- Figur 2:: Seitenansicht des Lagerbocks gemäß Figur 1 mit einem daran befestigten Schalter
- Figur 3:: Querschnitt durch die Anordnung gemäß Figur 2
- Figur 4:: Vergrößerte Darstellung eines Ausschnitts der Anordnung gemäß Figur 3
- Figur 5:: Seitenansicht des Schalters gemäß den Figuren 2 und 3
- Figur 6:: Unteransicht des Schalters gemäß den Figuren 2 und 3
- Figur 7:: Hinteransicht des Schalters gemäß den Figuren 2 und 3.

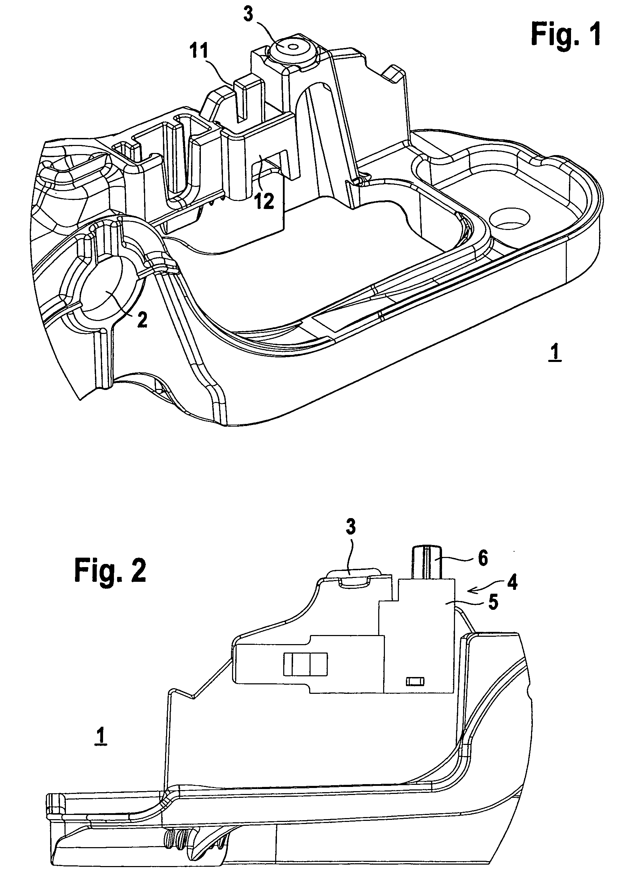

Figur 1 zeigt einen Lagerbock 1, der Bestandteil einer ansonsten nicht dargestellten Befestigungsvorrichtung für eine Feststellbremse eines Kraftfahrzeugs ist.

Eine solche Betätigungsvorrichtung umfasst einen Handbremshebel, der an dem Lagerbock 1 schwenkbar gelagert ist. In dem Handbremshebel ist eine Betätigungsstange geführt, die mittels eine Druckknopfs betätigt werden kann und welche an eine Festsetzeinrichtung gekoppelt ist. Die Festsetzeinrichtung weist eine Sperrklinke und ein Sperrsegment auf. Das Sperrsegment ist am Lagerbock 1 befestigt und weist eine Leiste mit Rastzähnen auf. Die Sperrklinke weist an ihrem unteren Ende eine Rastnase auf, die an den Rastzähnen des Sperrsegments eingerastet werden kann. Das obere Ende der Sperrklinke ist mit der Betätigungsstange gekoppelt.

Die Festeinrichtung dient dazu, den Handbremshebel in einer bestimmten Schwenkstellung zu fixieren. Durch Betätigen des Druckknopfs kann die Festsetzeinrichtung gelöst werden und der Handbremshebel kann in eine andere Schwenkstellung eingebracht werden, in der er wiederum durch die Festsetzeinrichtung fixierbar ist.

Dabei wird zur Betätigung der Feststellbremse der Handbremshebel nach oben gezogen und in einer gewünschten Endposition mittels der Festsetzeinrichtung fixiert. Soll die Feststellbremse gelöst werden, wird der Druckknopf betätigt und der Handbremshebel abgesenkt, bis er sich in seiner durch einen Endanschlag bestimmten untersten Position befindet.

Der Lagerbock 1 besteht aus einem metallischen Druckgussteil. Wie aus Figur 1 ersichtlich weist der Lagerbock 1 Bohrungen 2 auf, in welchen die Elemente einer Schwenklagerung für den Handbremshebel integriert werden können, so dass der Handbremshebel bezüglich einer horizontalen Schwenkachse am Lagerbock 1 schwenkbar gelagert ist.

Wie aus Figur 1 weiter ersichtlich, ist am oberen Rand eines seitlichen Teils des Lagerbocks 1 ein Gummipuffer 3 gelagert. Dieser bildet den Endanschlag für den Handbremshebel, das heißt der Handbremshebel liegt mit einem Anschlagsegment auf dem Gummipuffer 3 auf, wenn sich der Handbremshebel in seiner unteren Endposition befindet.
An dem seitlichen Teil der Lagerbocks 1 wird, wie in Figur 2 dargestellt ein Schalter 4 befestigt.
Der Schalter 4 weist ein Schaltgehäuse 5 auf. Weiterhin weist der Schalter 4 einen Schaltknopf 6 auf, der über die Oberseite des Schaltgehäuses 5 hervorsteht. Das Schaltgehäuse 5 und der Schaltknopf 6 bestehen jeweils aus einem Kunststoff-Spritzgussteil.
Im nicht betätigten Zustand steht der Schaltknopf 6, wie in Figur 2 dargestellt, weit über das Schaltgehäuse 5 hervor. Dabei steht die Oberseite des Schaltknopfs 6 auch über die Oberseite des Gummipuffers 3 hervor. Im betätigten Zustand ist der Schaltknopf 6 durch den auf dem Gummipuffer 3 aufliegenden Handbremshebel in das Schaltgehäuse 5 eingedrückt.
Mit dem Schalter 4 wird eine Anzeige in dem Fahrerraum des Kraftfahrzeugs, in welchem auch der Handbremshebel für den Fahrer zugänglich angeordnet ist, angesteuert. Die Anzeige zeigt, vorzugsweise mit einer Warnmeldung, an, wenn die Feststellbremse angezogen ist. Diese Anzeige erscheint, wenn der Schalter 4 nicht betätigt ist. Wenn der Schalter 4 betätigt ist (das heißt wenn der Handbremshebel auf dem Schalter 4 aufliegt) unterbleibt die Warnmeldung. Damit wird die Anzeige im Fahrerraum aktiviert, wenn sich der Schalter 4 in einem ersten Schaltzustand ("nicht betätigt") befindet. Weiterhin ist die Anzeige nicht aktiviert, wenn sich der Schalter 4 in einem zweiten Schaltzustand ("betätigt") befindet. Dieser betätigte Schalterzustand liegt vor, wenn der Handbremshebel in seiner unteren Endposition liegt und den Schaltknopf 6 in das Gehäuse eindrückt.

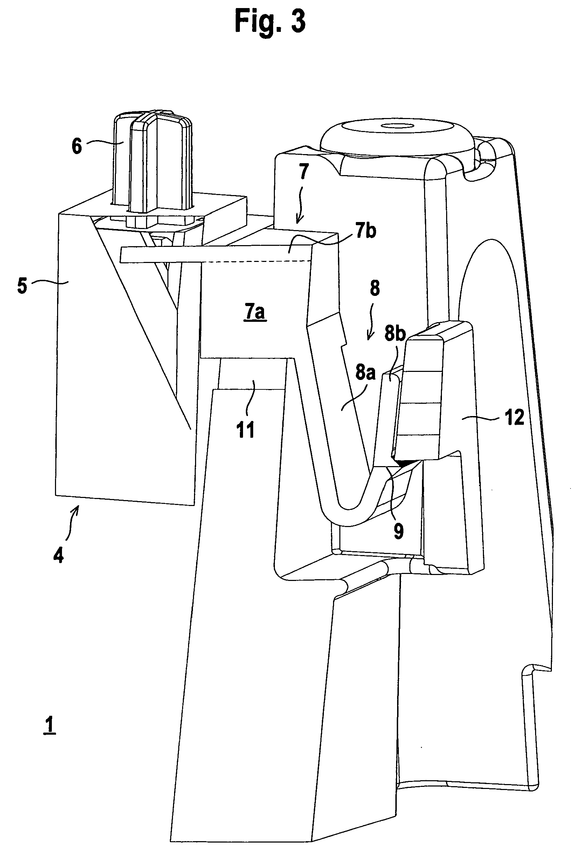

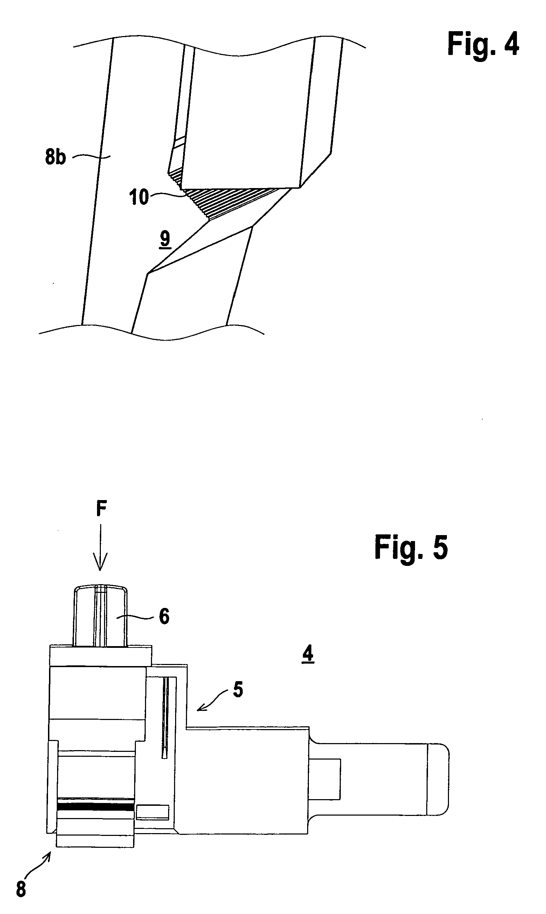

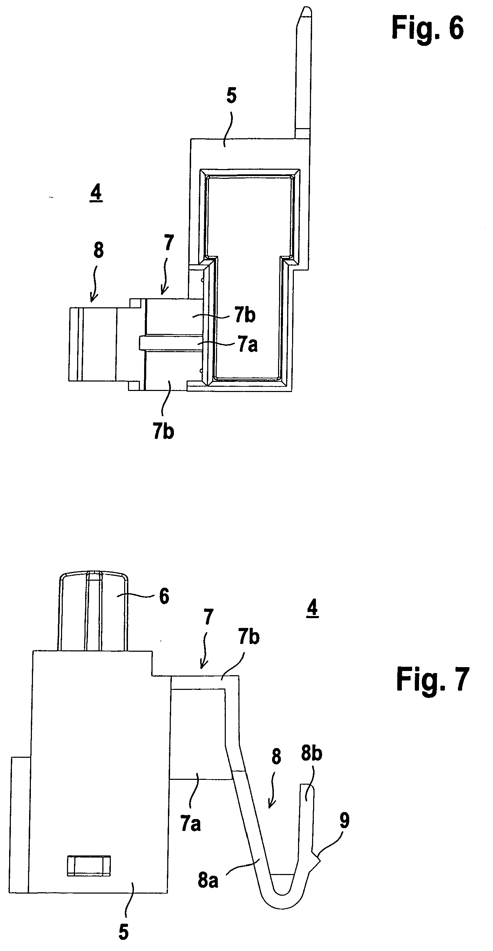

Figur 2 und die Detaildarstellung von Figur 3 zeigen die Mittel zur Lagerung des Schalters 4 am Lagerbock 1. Die Figuren 4 bis 7 zeigen den Schalter 4 jeweils in einer Einzeldarstellung.

Der Schalter 4 weist, wie aus den Figuren 5 bis 7 ersichtlich, als Mittel zur Befestigung am Lagerbock 1 als Rastmittel ein T-förmiges Segment 7 und ein Federelement 8 auf. Beide Elemente sind einstückig mit dem Schaltgehäuse 5 ausgebildet.

Das T-förmige Segment 7 schließt unmittelbar an eine Seitenwand des Schaltgehäuses 5 an und besteht aus einem Unterteil in Form einer in vertikaler Richtung verlaufenden Rippe 7a und einem auf dessen Oberseite aufsitzenden Oberteil 7b. Sowohl die Rippe 7a als auch das Oberteil 7b bestehen aus rechteckigen plattenförmigen Elementen mit konstanter Wandstärke.

Das Federelement 8 schließt unmittelbar an das T-förmige Segment 7 an und weist zwei V-förmig auseinander laufende Schenkel 8a, 8b auf. Aufgrund ihrer geringen Wandstärken weisen die Schenkel 8a, 8b elastische Eigenschaften auf und können somit etwas gegeneinander gedrückt werden, wobei nach Beenden der Druckbelastung die Schenkel 8a, 8b wieder in ihre Ausgangslage zurückfedern. Ein innerer Schenkel 8a schließt unmittelbar an das T-förmige Segment 7 an. An einem äußeren Schenkel 8b befindet sich eine Rastleiste 9.

Die Rastleiste 9 befindet sich an der Außenseite des äußeren Schenkels 8b. Wie die Detaildarstellung der Figur 4 zeigt, weist die Rastleiste 9 eine Anordnung von parallel laufenden Verrastungsrippen 10 auf. Die Verrastungsrippen 10 sind auf einer schiefen Ebene, die die Oberseite der Rastleiste 9 bildet, angeordnet. Die identisch ausgebildeten Verrastungsrippen 10 verlaufen in horizontaler Richtung.

In Figur 1 sind die Aufnahmen für das T-förmige Segment 7 und das Federelement 8 dargestellt. Als Rastaufnahme für das T-förmige Segment 7 ist an dem seitlichen Teil des Lagerbocks 1 eine Nut 11 vorgesehen. Die Längsachse der Nut 11 verläuft in vertikaler Richtung. Die Nut 11 mündet am oberen Rand des seitlichen Teils des Lagerbocks 1 aus. Als Aufnahme für das Federelement 8 ist ein Steg 12 am Lagerbock 1 vorgesehen, der am Lagerbock 1 nach innen versetzt und hinter dem seitlichen Teil des Lagerbocks 1 mit der Nut 11 angeordnet ist. Der Steg 12 bildet ein geradlinig verlaufendes Wandsegment des Lagerbocks 1. Die Unterseite des Steg 12 bildet eine ebene Fläche.

Zur Montage des Schalters 4 am Lagerbock 1 wird die Rippe 7a des T-förmigen Segments 7 in die Nut 11 des Lagerbocks 1 eingeführt. Ist die Rippe 7a in die Nut 11 vollständig eingeführt, liegt das Oberteil 7b des T-förmigen Segments 7 auf dem die Nut 11 begrenzenden Rand des Lagerbocks 1 auf. Dies ist in Figur 3 dargestellt. Dadurch wird eine verdrehsichere Lagerung des Schalters 4 am Lagerbock 1 erhalten.

Bei Einführen der Rippe 7a des T-förmigen Segments 7 in die Nut 11 wird der Schalter 4 an der Wand des Lagerbocks 1 nach unten geführt. Dabei wird das Federelement 8 in den Zwischenraum zwischen dem seitlichen Teil des Lagerbocks 1 und dem Steg 12 eingeführt. Die Rastleiste 9 liegt dabei am Steg 12 an, wodurch der äußere Schenkel 8b gegen den inneren Schenkel 8a gedrückt wird.

Die Position der Rastleiste 9 am äußeren Schenkel 8b ist so an das T-förmige Segment 7 angepasst, dass dann, wenn die Rippe 7a des T-förmigen Segments 7 vollständig in die Nut 11 eingeführt ist, die Rastleiste 9 über den unteren Rand des Stegs 12 hinausgefahren ist, so dass die Unterkante des Stegs 12 an einer Teilmenge der Verrastungsrippe 10 einrastet. Dabei federt der äußere Schenkel 8b wieder zurück und liegt dicht am Steg 12 an, wodurch die Verrastung des Stegs 12 an der Rastleiste 9 sicher hergestellt ist.

Da die Rastleiste 9 eine große Anzahl von Verrastungsrippen 10 aufweist, wird mit diesen eine sich selbst findende Verrastung der Rastleiste 9 am Steg 12 erhalten. Die so ausgebildete Rastleiste 9 sorgt damit für einen Toleranzausgleich. Dies bedeutet, dass bei vorhandenen, durch Bauteiltoleranzen bedingten Geometrieschwankungen des Federelements 8 und insbesondere des Lagerbocks 1 die Unterkante des Stegs 12 an unterschiedlichen Verrastungsrippen 10 der Rastleiste 9 einrasten kann. So ist auch bei vorhandenen Bauteiltoleranzen gewährleistet, dass mit der an dem Steg 12 verrasteten Rastleiste 9 das T-förmige Segment 7 in seiner Sollposition in der Nut 11 sicher gehalten wird, wodurch eine sichere, spielfreie Lagerung des Schalters 4 am Lagerbock 1 gewährleistet ist.

### Bezugszeichenliste

- (1): Lagerbock
- (2): Bohrung
- (3): Gummipuffer
- (4): Schalter
- (5): Schaltgehäuse
- (6): Schaltknopf
- (7): T-förmiges Segment
- (7a): Rippe
- (7b): Oberteil
- (8): Federelement
- (8a): Schenkel
- (8b): Schenkel
- (9): Rastleiste
- (10): Verrastungsrippe
- (11): Nut
- (12): Steg

## Patentansprüche

1. Betätigungsvorrichtung für eine Feststellbremse mit einem an einem Lagerbock (1) schwenkbar gelagerten Handbremshebel, welcher mittels einer Festsetzeinrichtung in einer vorgegebenen Schwenkstellung fixierbar ist, und mit einer im Handbremshebel geführten und in Wirkverbindung mit der Festsetzeinrichtung stehenden Betätigungsstange, welche im Handbremshebel verschiebbar gelagert ist, wobei am Lagerbock (1) ein Schalter (4) vorgesehen ist und der Handbremshebel ein Anschlagsegment aufweist, wobei in einer Endposition des Handbremshebels das Anschlagsegment den Schalter (4) betätigt, **dadurch gekennzeichnet, dass** am Lagerbock ein Endanschlag vorgesehen ist, der durch das Anliegen des Anschlagelements die Endposition des Handbremshebels bestimmt, und dass zur Befestigung des Schalters (4) am Lagerbock (1) Rastmittel und ein Federelement (8) vorgesehen sind, wobei die Rastmittel in Rastaufnahmen des Lagerbocks (1) einführbar sind, wodurch der Schalter (4) verdrehsicher am Lagerbock (1) gelagert ist, und wobei diese Lagerung des Schalters (4) durch Einrasten des Federelements (8) an einem Anschlag des Lagerbocks (1) gesichert ist.

2. Betätigungsvorrichtung nach Anspruch 1, **dadurch gekennzeichnet, dass** als Rastmittel am Schalter (4) ein T-förmiges Segment (7) vorgesehen ist, wobei das Unterteil des T-förmigen Segments (7) eine Rippe (7a) bildet, die in eine an einem oberen Rand des Lagerbocks (1) ausmündende, die Rastaufnahme bildende Nut (11) einführbar ist.

3. Betätigungsvorrichtung nach Anspruch 2, **dadurch gekennzeichnet, dass** die Nut (11) in vertikaler Richtung verläuft und eine verdrehsichere Lagerung für die Rippe (7a) bildet.

4. Betätigungsvorrichtung nach einem der Ansprüche 2 oder 3, **dadurch gekennzeichnet, dass** bei in die Nut (11) eingeführter Rippe (7a) das Oberteil (7b) des T-förmiges Segments (7) auf dem die Nut (11) begrenzenden Rand des Lagerbocks (1) aufliegt.

5. Betätigungsvorrichtung nach einem der Ansprüche 1 bis 4, **dadurch gekennzeichnet, dass** der Schalter (4) ein Schaltgehäuse (5) aufweist, wobei das Federelement (8) und das T-förmige Segment (7) einstückig mit dem Schaltgehäuse (5) ausgebildet sind.

6. Betätigungsvorrichtung nach Anspruch 5, **dadurch gekennzeichnet, dass** das Schaltgehäuse (5) aus Kunststoff besteht.

7. Betätigungsvorrichtung nach einem der Ansprüche 1 bis 6, **dadurch gekennzeichnet, dass** das Federelement (8) zwei V-formige angeordnete Schenkel (8a, b) aufweist, wobei an einem Schenkel (8b) eine Rastleiste (9) vorgesehen ist, die am Anschlag des Lagerbocks (1) einrastbar ist.

8. Betätigungsvorrichtung nach Anspruch 7, **dadurch gekennzeichnet, dass** die Rastleiste (9) eine Anordnung von parallel laufenden Verrastungsrippen (10) aufweist, wobei an einer Teilmenge der Verrastungsrippe (10) der Anschlag einrastbar ist.

9. Betätigungsvorrichtung nach einem der Ansprüche 7 oder 8, **dadurch gekennzeichnet, dass** die Rastleiste (9) entlang einer schiefen Ebene verläuft.

10. Betätigungsvorrichtung nach einem der Ansprüche 7 bis 9, **dadurch gekennzeichnet, dass** der Anschlag von der Unterkante eines Stegs (12) des Lagerbocks (1) gebildet ist.

11. Betätigungsvorrichtung nach einem der Ansprüche 7 bis 10, **dadurch gekennzeichnet, dass** das Federelement (8) einen inneren, an das T-förmige Segment (7) anschließenden inneren Schenkel (8a) und einen äußeren Schenkel (8b) aufweist, wobei die Rastleiste (9) am äußeren Schenkel (8b) angeordnet ist.

## Claims

1. Actuating device for a parking brake with a handbrake lever, which is pivotably mounted on a bearing block (1) and which is fixable in a predetermined pivot setting by means of a fixing device, and with an actuating rod, which is guided in the handbrake lever and which is disposed in operative connection with the fixing device and mounted to be displaceable in the handbrake lever, wherein a switch (4) is provided at the bearing block (1) and the handbrake lever has an abutment segment, wherein the abutment segment actuates the switch (4) in an end position of the handbrake lever, **characterised in that** provided at the bearing block is an end abutment which determines the end position of the handbrake lever by the bearing against the abutment element and that detent means and a spring element (8) are provided at the bearing block (1) for fastening the switch (4), wherein the detent means are insertable into detent mounts of the bearing block (1), whereby the switch (4) is mounted on the bearing block (1) to be secure against rotation, and wherein this mounting of the switch (4) is secured by detenting the spring element (8) at an abutment of the bearing block (1).

2. Actuating device according to claim 1, **characterised in that** a T-shaped segment (7) is provided as detent means at the switch (4), wherein the lower part of the T-shaped segment (7) forms a rib (7a) which is insertable into a groove (11) opening at an upper edge of the bearing block (1) and forming the detent mount.

3. Actuating device according to claim 2, **characterised in that** the groove (11) extends in vertical direction and forms a mounting, which is secure against rotation, for the rib (7a).

4. Actuating device according to one of claims 2 and 3, **characterised in that** when the rib (7a) is inserted into the groove (11) the upper part (7b) of the T-shaped segment (7) rests on the edge, which bounds the groove (11), of the bearing block (1).

5. Actuating device according to any one of claims 1 to 4, **characterised in that** the switch (4) comprises a switch housing (5), wherein the spring element (8) and the T-shaped segment (7) are formed integrally with the switch housing (5).

6. Actuating device according to claim 5, **characterised in that** the switch housing (5) consists of plastics material.

7. Actuating device according to any one of claims 1 to 6, **characterised in that** the spring element (8) has two limbs (8a, b) arranged in V-shape, wherein a detent strip (9) detentable with the abutment of the bearing block (1) is provided at one limb (8b).

8. Actuating device according to claim 7, **characterised in that** the detent strip (9) has an arrangement of parallelly extending detent ribs (10), wherein the abutment is detentable with some of the total of detent ribs (10).

9. Actuating device according to one of claims 7 and 8, **characterised in that** the detent strip (9) extends along an oblique plane.

10. Actuating device according to any one of claims 7 to 9, **characterised in that** the abutment is formed by the lower edge of a web (12) of the bearing block (1).

11. Actuating device according to any one of claims 7 to 10, **characterised in that** the spring element (8) has an inner limb (8a) connected with the T-shaped segment (7) and an outer limb (8b), wherein the detent strip (9) is arranged at the outer limb (8b).

## Revendications

1. Dispositif d'actionnement pour un frein de stationnement, avec un levier de frein à main monté à pivotement sur un palier support (1), levier qui peut être fixé dans une position de pivotement prédéfinie au moyen d'un organe d'immobilisation, et avec une tringle d'actionnement guidée dans le levier de frein à main et fonctionnellement reliée à l'organe d'immobilisation, tringle qui est montée à translation dans le levier de frein à main, sachant qu'un commutateur (4) est prévu sur le palier support (1) et que le levier de frein à main présente un segment de butée, sachant que le segment de butée actionne le commutateur (4) dans une position finale du levier de frein à main,
**caractérisé en ce qu'**une butée finale est prévue sur le palier support (1), butée qui détermine la position finale du levier de frein à main par l'application de l'élément de butée,
et **en ce que** des moyens d'enclenchement et un élément (8) à effet de ressort sont prévus pour la fixation du commutateur (4) sur le palier support (1), sachant que les moyens d'enclenchement peuvent être introduits dans des logements d'enclenchement du palier support (1), de sorte que le commutateur (4) est monté sans possibilité de rotation sur le palier support (1), et sachant que ce montage du commutateur (4) est assujetti par l'enclenchement de l'élément (8) à effet de ressort sur une butée du palier support (1).

2. Dispositif d'actionnement selon la revendication 1, **caractérisé en ce qu'**un segment (7) en forme de T est prévu comme moyen d'enclenchement sur le commutateur (4), sachant que la partie inférieure du segment (7) en forme de T forme une nervure (7a) qui peut être introduite dans une rainure (11) débouchant sur un bord supérieur du palier support (1) et formant le logement d'enclenchement.

3. Dispositif d'actionnement selon la revendication 2, **caractérisé en ce que** la rainure (11) s'étend en direction verticale et forme un montage sans possibilité de rotation pour la nervure (7a).

4. Dispositif d'actionnement selon la revendication 2 ou 3, **caractérisé en ce que**, lorsque la nervure (7a) est introduite dans la rainure (11), la partie supérieure (7b) du segment (7) en forme de T repose sur le bord du palier support (1) qui délimite la rainure (11).

5. Dispositif d'actionnement selon l'une des revendications 1 à 4, **caractérisé en ce que** le commutateur (4) présente un boîtier de commutation (5), sachant que l'élément (8) à effet de ressort et le segment (7) en forme de T sont réalisés d'un seul tenant avec le boîtier de commutation (5).

6. Dispositif d'actionnement selon la revendication 5, **caractérisé en ce que** le boîtier de commutation (5) est réalisé en matière plastique.

7. Dispositif d'actionnement selon l'une des revendications 1 à 6, **caractérisé en ce que** l'élément (8) à effet de ressort présente deux branches (8a, b) disposées en forme de V, sachant qu'une barrette d'enclenchement (9), qui peut être enclenchée sur la butée du palier support (1), est prévue sur une branche (8b).

8. Dispositif d'actionnement selon la revendication 7, **caractérisé en ce que** la barrette d'enclenchement (9) présente un agencement de nervures d'enclenchement (10) s'étendant en parallèle, sachant que la butée peut être enclenchée sur une partie des nervures d'enclenchement (10).

9. Dispositif d'actionnement selon la revendication 7 ou 8, **caractérisé en ce que** la barrette d'enclenchement (9) s'étend le long d'un plan incliné.

10. Dispositif d'actionnement selon l'une des revendications 7 à 9, **caractérisé en ce que** la butée est formée par l'arête inférieure d'une saillie (12) du palier support (1).

11. Dispositif d'actionnement selon l'une des revendications 7 à 10, **caractérisé en ce que** l'élément (8) à effet de ressort présente une branche intérieure (8a) se raccordant au segment (7) en forme de T et une branche extérieure (8b), sachant que la barrette d'enclenchement (9) est disposée sur la branche extérieure (8b).
